Europäisches Patentamt

European Patent Office (11) Publication number: **0 051 924**
**A2**
Office européen des brevets

(19)

(12) **EUROPEAN PATENT APPLICATION**

(21) Application number: **81304697.6**

(22) Date of filing: **09.10.81**

(51) Int. Cl.³: **B 29 C 17/10**

(30) Priority: **12.11.80 US 206201**

(43) Date of publication of application: **19.05.82 Bulletin 82/20**

(84) Designated Contracting States: **BE DE FR GB IT NL**

(71) Applicant: **MOBIL OIL CORPORATION, 150 East 42nd Street, New York New York 10017 (US)**

(72) Inventor: **Myers, Donald Witbeck, 3691 East Saddleback Road, Canandaigua New Yok (US)**
Inventor: **Legrett, Samantha Linda, 156 Ontario Street, Canandaigua New York (US)**

(74) Representative: **Cooper, John Anthony et al, Mobil Court 3 Clements Inn, London WC2A 2EB (GB)**

(54) **Method and apparatus for trimming thermoformed articles.**

(57) There are provided a method and apparatus for trimming shaped articles from the connecting web of sheet plastics material from which the articles have been thermoformed so as to achieve accurate trimming regardless of irregular spacing of the articles in the sheet. In the method, each of a plurality of connected articles is first approximately, and then exactly registered with an article punch and the web trimmed off with a die. Exact registration of articles and punches may be achieved by severing the connecting web between the articles, or by arranging the punches at different heights so that each article in sequence registers exactly and is trimmed. Apparatus is provided for carrying out the latter method.

0051924

## METHOD AND APPARATUS FOR TRIMMING
## THERMOFORMED ARTICLES

This invention relates to a method and apparatus for trimming thermoformed articles from a plastics web. More especially, it relates to the precise trimming of such articles by obviating the effects of unequal spacings between the articles.

Thermoformed plastics articles have hitherto been trimmed from the surrounding web of sheet material by treating the web as a complete unit. There is consequently no freedom of movement of any one article in relation to those surrounding it. As a result, accuracy and consistency of trim depend wholly upon the indexing of the unit or web into the trim area and upon the shrinkage of the web for which allowances have been made in the trim tool. However, shrinkage values for thermoformed plastics articles and for the surrounding web can vary with sheet characteristics, article size and shape, and conditions of thermoforming. In consequence, indexing of the articles and surrounding web into the trim area often becomes quite critical, so that trimmed edges of articles may be unsatisfactory and cause significant product rejects.

A potentially useful trimming concept is described in U.S. Patent 1,062,028 for sheets of cooked pastry cones. When such sheets are removed from the cooking machine, more or less uneven shrinking of the pastry connecting the cones is found to have occurred, so that the cones are more or less unevenly spaced. The trimmer comprises tapered plungers, disposed in rows of progressively decreasing length and having outwardly tapered spindles which successively center the cones in opposed tubes. The longer plungers trim the bottom row of cones without bringing any strain upon the remaining cones. Because the centers of the tubes are more widely spaced than the centers of the baked cones, each succeeding row of cones is slightly raised when it is engaged by the plungers and forced into the tubes after the lower row has been sheared off. However, this trimming operation is discontinuous and seems to require a stiff and non-resilient sheet as pressure is exerted transversely by the tapered plungers. Although there is freedom of movement of the cones in the direction of decreasing length for the plungers, there is no freedom of movement from side-to-side (across the web). This relieved-punch concept also requires that all cones along a row are in parallel.

U.S. Patent 3,785,762 describes a thermoforming apparatus which includes a die-cutting press comprising top and bottom platens which are driven by a toggle mechanism arranged so that the upper die comes down around the thermoformed article, providing a self-centering action, and then the lower platen rises to complete the cutting action. This self-centering action compensates for minor variations in the parts as they are molded and indexed, but the apparatus can operate on only a single thermoformed article per stroke and cannot compensate for minor variations in distances between a plurality of thermoformed articles to be trimmed in a single operation.

The present invention seeks to provide a method and an apparatus by means of which a plurality of shaped articles connected together by a web of sheet plastics material from which they have been thermoformed, can be accurately trimmed from that web without regard to the spacing of the articles being non-uniform as a result of irregular shrinkage of the sheet plastics material during or after the thermoforming operation.

In accordance with the present invention, there is provided a method for trimming shaped articles from the connecting web of sheet plastics material from which the articles have been thermoformed, comprising

(a) bringing a plurality of adjacent articles connected by the web into approximate registry with an equal plurality of article punches;

(ii) bringing each article into exact registry with its respective punch; and

(iii) engaging each article punch with a cooperating die to trim the web from the article in the punch.

The method of the invention is especially useful for trimming such articles as cups, bowls and similar receptacles from the web of sheet plastics material from which they have been thermoformed, but may also be used for trimming other shaped articles of regular or irregular shape. The plastics material may be any one of a number of various materials, although foamed materials and especially foamed styrenic polymer materials, are especially well suited for use in the method of the invention. The method of this invention is especially applicable to the trimming of shaped articles which have been thermoformed in accordance with the method described in our published European Patent Application 0010847.

Shaped articles are generally thermoformed from stock material in the form of a continuous sheet in one or more banks of thermoforming machines capable of forming simultaneously a plurality of thermoformed articles. The resulting articles from a sequence of thermoforming operations generally form a plurality of parallel rows in the sheet. In carrying out the method of this invention, the sheet is suitably first slit in the machine direction into a plurality of strips each containing a single row of shaped articles interconnected by the web. However, it is equally possible to slit the sheet in the machine direction into double rows, for example, and to perform the trimming operation on such double rows, or to slit the sheet after a plurality of the shaped articles has been loosely registered with the trimming punches. In any event, the web which connects the shaped articles can be slit by any conventional means, for example rotary, travelling or stationary knives, laser beams or shear punches.

The first stage in the trimming method according to the invention is bringing a plurality of the shaped articles into approximate registry with an equal plurality of article punches. This indexing operation is suitably carried out by a reciprocating indexing assembly which, in timed sequence with the trimming action of the punches and dies, advances the required number of shaped articles in the machine direction into approximate registry with the punches. The indexing assembly is preferably pneumatically operated and suitably includes an indexing arm carrying a shoe, the forward end of the shoe conforming in shape to the interior of the shaped articles to enable the shoe, on the forward stroke of the indexing assembly, to enter one article and to push it and the other articles in the same strip, forward towards the punches so that the plurality of articles adjacent the leading edge of the strip approximately registers with the punches.

Once the shaped articles have been approximately registered with the article punches, they are suitable isolated from the following articles in the strip by severing the web of plastics sheet between the rearmost article registered with its punch, and the adjacent upstream article. Such a severing action may be carried out by any one of the various devices mentioned above in relation to slitting the web, but is preferably carried out by a shear punch which operates when the punches and dies begin to close to effect the trimming operation.

Following the step of approximate registration, the shaped articles are brought into exact registry with their respective punches before trimming. Such exact registration is achieved by providing each article with complete freedom of movement relative to all other articles to be trimmed, and obviates variable spacing between the shaped articles caused by variable shrinkage or other deformation of the plastics sheet and hence compressional and tensional forces in the plane of the sheet.

This complete freedom of movement can be achieved in various ways. Thus, in accordance with one aspect of the invention, once the plurality of shaped articles has been loosely registered with the punches, the web which connects that plurality of articles to other articles in the strip is severed to isolate the plurality of articles, and the web is further severed between

F-0663-L -5- 0051924

each article and its adjacent article(s) in a single, simultaneous operation or sequence of operations, so that each article is completely independent of all other articles and can register exactly with its respective punch. This simultaneous or sequential severing can be carried out with shear punches which operate when the article punches and dies begin to close to trim the articles.

In accordance with another, especially preferred aspect of the invention, the plurality of shaped articles is first loosely registered with the punches and then severed from the remainder of the strip and each article is given complete freedom of movement in a predetermined sequence by virtue of the article punches being of diverse heights so that only one article at a time can exactly register with its punch, while the other articles, being still connected by the web and thereby supported by the exactly registered article, are still only loosely registered with their respective punches. That one, exactly registered article can then be trimmed from the web, allowing the article which was previously loosely registered with the next tallest punch to become exactly registered with that punch and be precisely trimmed. In this particular method, it is not necessary to sever the web between the articles either prior to or subsequent to trimming, although it may be desirable to sever that section of web remaining after an article has been trimmed from it, before trimming an adjacent article from the web.

The present invention also provides apparatus for use in carrying out such a method as that described immediately above, the apparatus comprising

(i) a plurality of article punches mounted on and extending at diverse lengths from a punch platen and so arranged as to receive in approximate registry a plurality of adjacent articles connected by the web;

(ii) a bolster including an equal plurality of mating dies;

(iii) drive means for bringing the punch platen and die bolster into proximity and causing the punches to mate with their respective dies in a predetermined sequence, and thereby trimming the web from each article in exact registry with its respective punch; and

(iv) an ejector assembly for ejecting the plurality of trimmed shaped articles from the dies.

After trimming of a particular plurality of shaped articles is complete, those articles must be ejected from the punches and/or dies to enable the trimming operation to be repeated with another plurality of articles. Ejection of all articles is preferably carried out simultaneously, although the articles can be ejected sequentially, if desired.

In order to facilitate ejection of the articles from the punches and/or dies, both the punches and dies are suitably open at both ends. In this way, the trimmed articles can be ejected from the punches through the dies by means of push rods acting through the open ends of the punches.

The push rods which cause ejection of the trimmed articles suitably form part of a single ejection assembly operated by a single drive means, for example, a pneumatic or hydraulic drive. As stated above, all articles are preferably ejected simultaneously and since, in the preferred method described above, the punches are of diverse height, the trimmed articles will also be at diverse heights within the dies. Consequently, the ejector push rods are suitably of diverse lengths so that they will contact, and hence eject, the trimmed articles at the same time.

The sequence of steps in the trimming operation according to the invention, comprising approximate registration, exact registration and trimming itself, is suitably carried out with the thermoformed sheet hanging vertically, since this will generally be the attitude of the sheet after it has passed through the thermoforming apparatus. However, the method of the invention can be operated in the same manner with the sheet disposed horizontally or, indeed, at any angle intermediate the vertical and the horizontal.

In accordance with a further aspect of the invention, trimming of the shaped articles can also be carried out on a continuous basis by mounting the dies on a straight reach of chain conveyor and the punches on a closing reach of chain conveyor, bringing the articles into approximate registration with the punches and then into exact registration after sequential severing of the connecting web. In this instance, the closing reach of chain conveyor is preferably horizontally disposed so that each article is able to drop onto or into its respective punch after being severed from adjacent articles.

The present invention will now be described in greater detail by way of example only with reference to the accompanying drawings, in which:

Figure 1 is a side view of the apparatus in accordance with the invention;

Figures 2 and 3 show sequential views of the trimming operation using the apparatus shown in Figure 1; and

Figure 4 shows a trimming operation using an alternative apparatus.

In the drawings, the apparatus is so constructed that the plastics sheet in which the shaped articles have been thermoformed, is horizontally disposed at all times. As stated above, however, the method of the invention can also be performed with the sheet disposed vertically or at any angle intermediate the horizontal and vertical. Bearing this in mind, references in the following description of the drawings to the sheet, shaped articles and various elements of the apparatus moving in particular directions, should be construed accordingly.

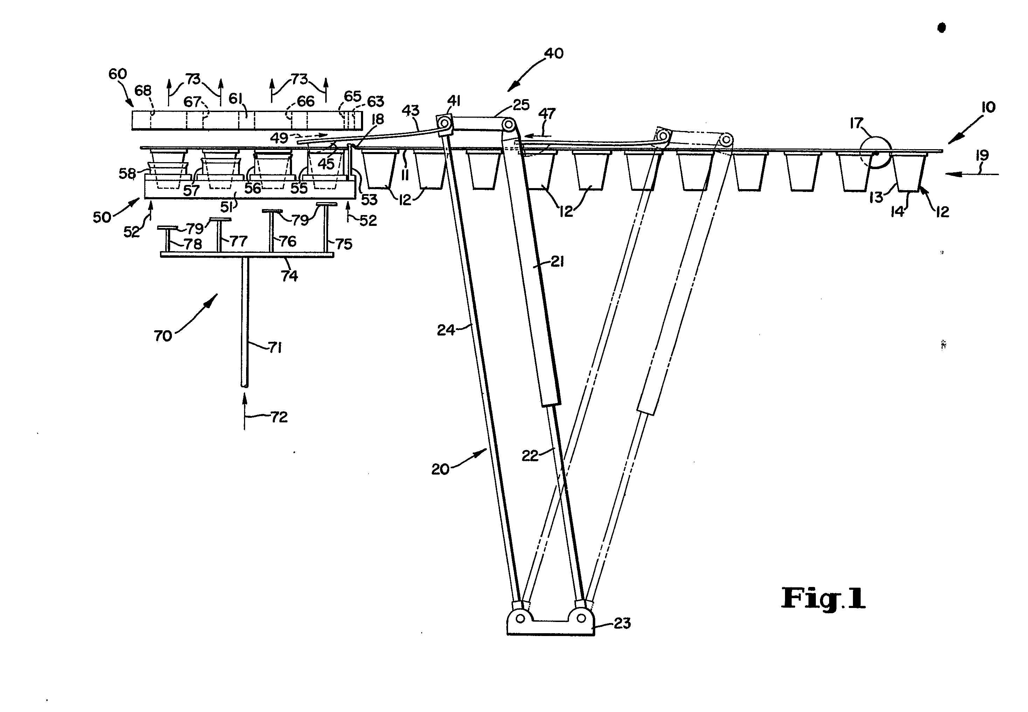

Referring first to Figure 1 of the drawings, the apparatus includes an indexing arm assembly 40 including an indexing linkage 20, a punch assembly 50, a die assembly 60 and an ejector assembly 70. These assemblies operate continuously in a reciprocating manner in time coordination with operation of the indexing linkage 20.

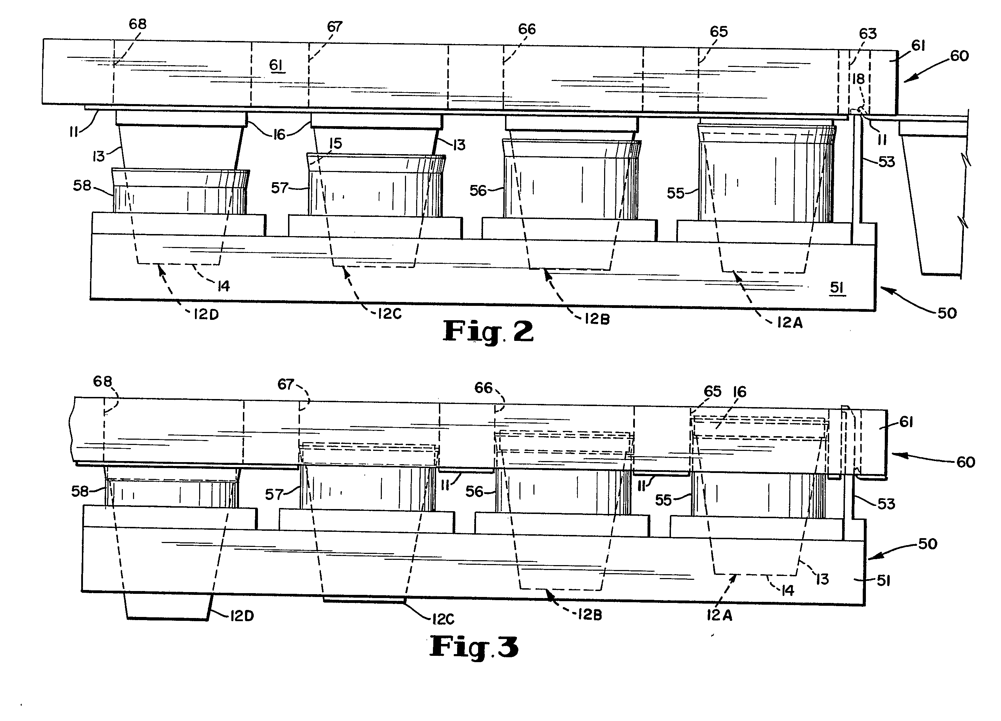

In Figure 1, a thermoformed sheet 10 contains a plurality of rows of cups 12 which are connected and surrounded by web 11. Sheet 10 is moving in the direction of arrow 19. Circular knives 17 slit the web 11 in the machine direction to form a plurality of strips, each strip containing a row of cups 12. Guide bars (not shown in Figure 1) are located along the edges of each strip, both front and back, for separating adjacent strips while a row of brushes (also not shown in Figure 1) are disposed on each side of the cups for guiding cups 12 as the strip is passed into the trim tool. Each cup 12 has a generally frusto-conical side wall 13, a base 14 and outer rim 16 (see Figure 2).

The indexing arm assembly 40 includes the indexing linkage 20 which comprises a cylinder 21 which contains a piston, a piston rod 22 which is operably connected to the piston in cylinder 21, a base 23 which is rigidly attached to a frame (not shown) and to which piston rod 22 is pivotally connected, an arm 24 which is also pivotally connected to base 23, and a short link 25 which pivotally connects both arm 24 and cylinder 21. The indexing arm assembly 40 also comprises an attachment block 41 which is attached to arm 24, a shoe arm 43 which is rigidly attached to attachment block 41, and a shoe 45 which is attached to the remote end of arm 43 and it is adapted to dip into the open tops of cups 12. Shoe 45 has a forward end which has the same shape as inner lips of cups 12.

The indexing linkage 20 reciprocates between a rear position indicated in broken lines, and a forward position. When it occupies its rear position, shoe 45 dips into the open top of a cup 12 where its forward end engages the cup rim and then pushes the engaged cup 12 forward in the direction of arrow 47 as the linkage 20 is moved by the cylinder 21. When the engaged cup 12 has been indexed into the trim tool, indexing arm assembly 40 is lifted and withdrawn in the direction of arrow 49 to its rear position.  Simultaneously, the trim tool is being operated to
separate a terminal portion of the strip of cups from the
remainder of the strip, as described below.

The punch assembly 50 comprises a punch platen 51, a
shear punch 53 which is rigidly attached to platen 51, a first cup
punch 55, a second cup punch 56, a third cup punch 57, and a
fourth cup punch 58.  All four punches 55-58 are rigidly attached
to the punch platen 51 and vary sequentially in length.

In the position shown in Figure 1, as shoe 45 is being
disengaged from cup 12, punch 55, within which cup 12 has been
loosely aligned or registered, has moved partially towards web 11
in the direction of arrow 52, and shear punch 53 has cut web 11,
forming upturned web 18.  After movement of punch 55 through an
additional short distance, it will engage web 11, cut through it,
and slide beyond web 11 into die assembly 60.

The die assembly 60 comprises a die platen 61, a knife
recess 63 in platen 61, and first, second, third, and fourth die
recesses 65, 66, 67, 68, respectively, which are aligned with
punches 55-58.

The ejection assembly 70 comprises a main ejection shaft
71, a lateral ejection arm 74 which is rigidly attached to one end
of shaft 71, and first, second, third and fourth push rods 75, 76,
77, 78, respectively, which are rigidly attached to arm 74, in
parallel with shaft 71, and an ejector disc 79 at the end  of each
push rod 75-78.  Ejection assembly 70 is moved in the direction of
arrow 72 by an air cylinder (not shown in Figure 1).  This motion
results in each of the cups 12 that has been trimmed by punches
55-58 being ejected simultaneously in the direction of arrows 73
through die recesses 65-68, perpendicular to the plane of web 11
remaining from original sheet 10.

The trimming action of the punch assembly 50 and die
assembly 60 is shown in detail in Figures 2 and 3, Figure 2
showing commencement of the trimming operation and Figure 3
showing termination of the trimming operation.

Referring to Figure 2, the four interconnected cups 12A, 12B, 12C and 12D, previously loosely registered in their respective punches 55, 56, 57 and 58, have been isolated from the remainder of the strip of cups by shear punch 53, and the punch assembly 50 has moved towards die assembly 60. Since the punch 55 extends further from the punch platen 51 than punches 56, 57 and 58, the cup 12A within punch 55 is free to register exactly with that punch, the lip 16 of cup 12A nesting within a mating recess 15 within the top of the punch. As the punch assembly continues its upward movement, the web 11 will contact the face of the die platen 61 and this will assist in any final exact registration of the cup 12A within punch 55 that may have been prevented or hindered by the weight of the other three cups 12B, 12C and 12D. Further upward movement of the punch assembly causes punch 55 and die 65 to engage, shearing the web 11 around the rim of the cup 12A, freeing the cup 12A and allowing the web 11 to drop over the outside of punch 55.

At this point, the remaining three cups 12B, 12C and 12D will drop downwardly until the second cup 12B is exactly registered in the next tallest punch 56. As the upward movement of the punch platen continues, punch 56 engages die 66 trimming cup 12B from the web and allowing the third cup 12C to register exactly in its punch 57. This cup is then trimmed from the web 11 in the same manner, allowing cup 12D to register exactly in its punch 58, as shown in Figure 3. A final slight upward movement of the punch platen will then cause punch 58 to engage die 68, trimming the final cup 12D from the web 11.

Subsequently, the ejector assembly 70 rises in the direction of arrow 72 (see Figure 1) and, by means of the ejector discs 79 contacting the bases 14 of the cups, pushes the cups through the punches and dies and out of the rear face of the die platen 61 in the direction of the arrows 73. It will be noted that the ejector push rods 75-78 correspond in length to the heights of the respective punches, so that all four cups are ejected simultaneously.

The ejector assembly 70 and punch assembly 50 then retract downwardly and another four cups are advanced by the indexing arm assembly 40 and the cycle is repeated.

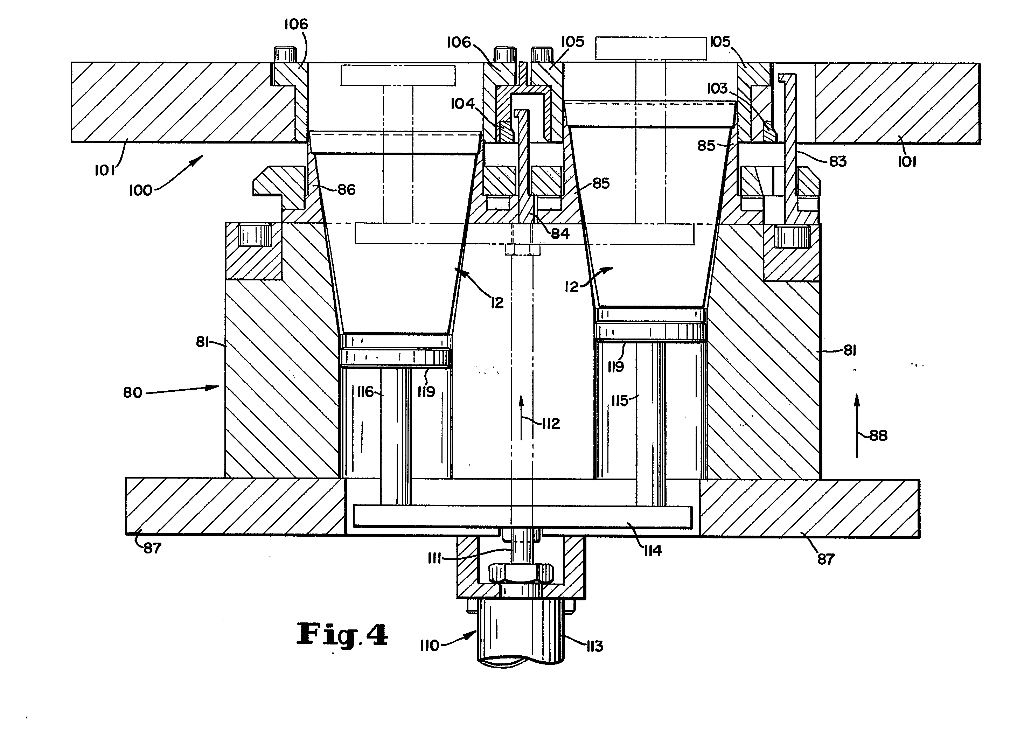

Apparatus for trimming only two cups per cycle is shown in detail in Figure 4 and comprises a punch assembly 80, a die assembly 100, and an ejection assembly 110. Punch assembly 80 comprises a punch platen 81, a first shear punch 83 and a second shear punch 84 which are rigidly attached to punch platen 81, a first article punch 85 and a second article punch 86 which are also rigidly attached to punch platen 81, a moving bolster 87 to which platen 81 is attached, and a DC-drive cam (not shown in Figure 4) which moves bolster 87 in the direction of arrow 88.

Shear punches 83 and 84 are disposed transversely to the incoming strip of cups so that they cut the strip in the cross-machine direction. They have unequal lengths, so that they shear each section of web sequentially, and they are disposed a sufficient distance apart that they bisect succeeding sections of web. Article punches 85, 86 also have unequal lengths and are spaced apart so that they approximately coincide with the inter-cup spacing to be expected. Shear punch 84 cuts the web after article punch 85 has relieved stresses by its trimming operation but provides insurance that the second cup, loosely aligned and registered with article punch 86, will be completely independent and free to float during the short time that article punch 86 is completing its closing operation, so that exact registration can occur.

Die assembly 100 comprises die platen 101, a first shear die 103, a second shear die 104, a first article die 105 and a second article die 106 which are respectively positioned for interacting with shear punches 83 and 84 and article punches 85 and 86. Shear dies 103 and 104 are within recesses which accommodate respective shear punches 83 and 84. Article dies 105 and 106 provide recesses for article punches 85, 86 and passageways for ejecting the trimmed cups.

Ejection assembly 110 comprises a cylinder rod 111 which is connected to an air cylinder 113 for extension in the direction of arrow 112, an ejector bar 114 which is rigidly attached to the outer end of rod 111, a first ejector rod 115 and a second ejector rod 116 which are rigidly attached at opposite ends of bar 114, and a pair of ejector discs 119 which are attached to the other ends of rods 115 and 116. The initial position of the ejection assembly 110 is shown in solid lines in Figure 4, but the final position, after complete movement of rod 111 in the direction of arrow 112, is shown in broken lines.

First ejector rod 115 is longer than second ejector rod 116. Because ejection movements of these rods and of their ejector discs are exactly the same in length and occur simultaneously, the differences in lengths of rods 115 and 116 cause the trimmed cups to be ejected simultaneously from punches 85 and 86.

Claims:

1. A method for trimming shaped articles from the connecting web of sheet plastics material from which the articles have been thermoformed, comprising

(i) bringing a plurality of adjacent articles connected by the web into approximate registry with an equal plurality of article punches;

(ii) bringing each article into exact registry with its respective punch; and

(iii) engaging each article punch with a cooperating die to trim the web from the article in the punch.

2. A method according to claim 1, wherein the web between adjacent articles is severed to enable each article to register exactly with its respective punch.

3. A method according to claim 2, wherein the web is severed sequentially between adjacent pairs of articles.

4. A method according to claim 2, wherein the web is severed simultaneously between adjacent pairs of articles.

5. A method according to claim 3 or claim 4, wherein the article punches are engaged with their respective dies in sequence.

6. A method according to claim 3 or claim 4, wherein the article punches are engaged with their respective dies simultaneously.

7. A method according to claim 1, wherein each article in sequence is brought into exact registry with its respective punch and trimmed from the web by bringing the punch into engagement with its respective die and, except for the final article in the sequence, thereby enabling another article to register exactly with its respective punch.

8. A method according to claim 7, wherein that portion of the web from which each article is trimmed is severed from the remainder of the web prior to trimming the succeeding article from the web.

9.  A method according to any one of claims 1 to 8, wherein the plurality of articles are in line in a strip of the web.

10.  A method according to claim 9, wherein the strip of web is severed from a longer strip after the plurality of articles has been approximately registered with the punches.

11.  A method according to claim 9 or claim 10, wherein the strip of web is severed from one or more adjacent parallel strips prior to approximate registration of the plurality of articles with the punches.

12.  A method according to claim 9 or claim 10, wherein the strip of web is severed from one or more adjacent parallel strips subsequent to approximate registration of the plurality of articles with the punches.

13.  A method according to any one of claims 1 to 12, wherein each trimmed article is ejected from its respective punch.

14.  A method according to claim 13, wherein each punch and die is open at both ends to enable each trimmed article to be ejected through its respective die.

15.  A method according to claim 13 or claim 14, wherein the trimmed articles are ejected simultaneously.

16.  Apparatus for trimming shaped articles from the connecting web of sheet plastics material from which the articles have been thermoformed, comprising

(i)  a plurality of article punches mounted on and extending at diverse lengths from a punch platen and so arranged as to receive in approximate registry a plurality of adjacent articles connected by the web;

(ii)  a bolster including an equal plurality of mating dies;

(iii)  drive means for bringing the punch platen and die bolster into proximity and causing the punches to mate with their respective dies in a predetermined sequence, and thereby trimming

F-0663-L                    -15-                    0051924

the web from each article in exact registry with its respective punch; and

(iv)  an ejector assembly for ejecting the plurality of trimmed shaped articles from the dies.

17.  Apparatus according to claim 16, which also includes shearing means arranged to sever the web and isolate each article from adjacent articles to enable each article to register exactly with its respective punch.

1400n

Fig.1

Fig. 2

Fig. 3

0051924

**Fig. 4**